# EUROPÄISCHE PATENTSCHRIFT

(11) **EP 2 478 243 B1**
(45) Veröffentlichungstag und Bekanntmachung des Hinweises auf die Patenterteilung: **02.03.2016**
(21) Anmeldenummer: 10754279.7
(22) Anmeldetag: 03.09.2010
(51) Int. Cl.: F16D 23/04

(54) **ÜBERTRAGUNGSRING FÜR EINE SYNCHRONISIERUNGSBAUGRUPPE FÜR EIN SCHALTGETRIEBE**
TRANSMISSION RING FOR A SYNCHRONISATION ASSEMBLY FOR A GEAR BOX
BAGUE DE TRANSMISSION POUR UN ENSEMBLE DE SYNCHRONISATION DE BOÎTE DE VITESSES

(30) Priorität: 14.09.2009 DE 102009041517
(43) Veröffentlichungstag der Anmeldung: 25.07.2012
(73) Patentinhaber: Hoerbiger Antriebstechnik Holding GmbH, 86956 Schongau (DE)
(72) Erfinder: ECHTLER, Peter, 86956 Schongau (DE); KÖLZER, Michael, 87672 Rosshaupten (DE); SAUTER, Markus, 86925 Fuchstal-Leeder (DE); SCHNELZER, Thomas, 86971 Peiting (DE); SIEGMUND, Armin, 86971 Peiting (DE); VÖLK, Wolfgang, 86978 Hohenfurch (DE)
(74) Vertreter: Prinz & Partner mbB
(86) Internationale Anmeldenummer: PCT/EP2010/005431
(87) Internationale Veröffentlichungsnummer: WO 2011/029558

(56) Entgegenhaltungen:
- EP-A2- 0 955 481
- DE-A1- 10 115 355
- DE-A1- 19 506 988
- DE-A1-102007 036 104
- FR-A- 712 597
- GB-A- 418 650

## Beschreibung

Die Erfindung betrifft einen Übertragungsring für eine Synchronisierungsbaugruppe für ein Schaltgetriebe.

Die Synchronisierungsbaugruppe (oder verkürzt: Synchronisierung) für ein Schaltgetriebe dient dazu, ein als Losrad drehbar auf einer Getriebewelle angeordnetes Gangrad drehfest mit der Getriebewelle zu koppeln, um ein Drehmoment zwischen Gangrad und Getriebewelle beziehungsweise Getriebewelle und Gangrad übertragen zu können. Dies ist insbesondere für Schaltgetriebe in Kraftfahrzeugen allgemein bekannt.

Der Übertragungsring, häufig auch als Schaltmuffe oder Transmitter bezeichnet, ist dabei dasjenige Teil, das in axialer Richtung verstellt wird, um in einem ersten Schritt die Synchronisierung zu bewirken, also den Drehzahlangleich zwischen der Getriebewelle und dem Gangrad herbeizuführen, und in einem zweiten Schritt die drehfeste Verbindung zwischen der Getriebewelle und dem Gangrad herzustellen. Zum Verstellen des Übertragungsrings werden beispielsweise Schaltgabeln verwendet, die bei einem manuell geschalteten Getriebe mit dem Schalthebel oder im Falle eines Automatikgetriebes mit einem Aktor verbunden sind.

Im Stand der Technik werden für die Schaltmuffen häufig sehr massive Bauteile verwendet, die entweder durch spanende Bearbeitung in die gewünschte Form gebracht sind oder als Sinterteil ausgeführt sind. In beiden Fällen sind die Herstellungskosten recht hoch.

Um eine kostengünstigere Fertigung zu realisieren ist in der EP 0 955 481 A2 bereits eine Schiebemuffe einer Synchronisationseinheit für ein Schaltgetriebe beschrieben, mit einem Muffenkörper, der durch einen spanlosen Formgebungsprozess aus Blech gefertigt und als einstückiges Bauteil ausgebildet ist. Weiterhin offenbart die DE10 2007 036 104 den Oberbegriff von Anspruch 1.

Die Aufgabe der Erfindung besteht darin, einen Übertragungsring für eine Synchronisierungsbaugruppe für ein Schaltgetriebe zu schaffen, der sich durch geringe Herstellungskosten auszeichnet.

Zur Lösung dieser Aufgabe ist erfindungsgemäß ein Übertragungsring für eine Synchronisierungsbaugruppe für ein Schaltgetriebe vorgesehen, mit einem Basisteil, an dem ein Betätigungsteil angreifen kann, um das Basisteil in axialer Richtung zu verschieben, und zwei flachen, scheibenförmigen Verzahnungsteilen, die als separate Bauteile ausgeführt sowie mindestens in axialer Richtung am Basisteil fixiert sind und jeweils eine Übertragungsverzahnung aufweisen, wobei auf beiden axialen Seiten des Basisteils jeweils ein Verzahnungsteil angeordnet ist. Die Erfindung beruht auf dem Grundgedanken, den Übertragungsring mehrteilig auszuführen, so dass die einzelnen Bauteile optimal hergestellt werden können und auch im Hinblick auf ihre Funktion optimiert sind.

Vorzugsweise ist vorgesehen, dass das Basisteil und/oder die Verzahnungsteils aus Blech bestehen. Auf diese Weise lassen sich die Bauteile, aus denen der Übertragungsring aufgebaut wird, mit geringem Aufwand und ausgehend von kostengünstigen Materialien herstellen.

Dabei ist vorzugsweise vorgesehen, dass das Basisteil und/oder das Verzahnungsteil ein Stanzteil ist. Auf diese Weise lässt sich mit geringen Kosten die gewünschte Geometrie einschließlich einer eventuell nötigen Verzahnung herstellen.

Gemäß einer Ausführungsvariante ist vorgesehen, dass das Basisteil pulvermetallurgisch hergestellt ist. Auch bei diesem Herstellungsverfahren ergeben sich aufgrund des modularen Aufbaus des Übertragungsrings Vorteile, da das Basisteil mit einer einfacheren Geometrie ausgeführt werden kann, insbesondere ohne Hinterschnitt.

Gemäß einer Ausführungsform ist vorgesehen, dass das Verzahnungsteil mit dem Basisteil verschweißt, verlötet oder verklebt ist. Auf diese Weise wird eine stoffschlüssige Verbindung zwischen dem Basisteil und dem Verzahnungsteil erhalten, die sich durch hohe Festigkeit auszeichnet.

Gemäß einer Ausführungsvariante ist vorgesehen, dass das Verzahnungsteil mit dem Basisteil vernietet oder verprägt ist. Auf diese Weise lässt sich mit geringem Aufwand eine mechanisch belastbare Verbindung herstellen.

Gemäß einer bevorzugten Ausführungsform ist vorgesehen, dass das Verzahnungsteil mit einer Innenverzahnung versehen ist. Auf diese Weise kann das Drehmoment von der Getriebewelle zum Gangrad unmittelbar über das Verzahnungsteil und dessen Übertragungsverzahnung übertragen werden, ohne dass das Basisteil an der Drehmomentübertragung beteiligt ist. Somit wird die Verbindung zwischen dem Basisteil und dem Verzahnungsteil nicht mit dem Drehmoment belastet, so dass die Bauteile entsprechend dimensioniert werden können.

Gemäß einer Ausführungsvariante ist vorgesehen, dass das Basisteil mit einer Innenverzahnung versehen ist. Dies ermöglicht, das Basisteil präziser auf der Getriebewelle zu führen.

Die Erfindung wird nachfolgend anhand verschiedener Ausführungsformen beschrieben, die in den beigefügten Zeichnungen dargestellt sind. In diesen zeigen:
- Figur 1 in einer schematischen Explosionsansicht eine Getriebewelle mit Gangrädern und Synchronisierungsbaugruppe;
- Figur 2 einen schematischen Schnitt durch die Baugruppe von Figur 1;
- Figur 3 in einem schematischen Schnitt eine Synchronisierungsbaugruppe gemäß einer zweiten Ausführungsform;
- Figur 4 in einer Explosionsansicht die wesentlichen Bauteile der Synchronisierungsbaugruppe von Figur 3;
- Figur 5 in einer Explosionsansicht einen Übertragungsring gemäß einer dritten Ausführungsform der Erfindung;
- Figur 6 in einer perspektivischen Ansicht den Übertragungsring von Figur 5 in montiertem Zustand; und
- Figur 7 in einer perspektivischen Ansicht einen Übertragungsring gemäß einer vierten Ausführungsform.

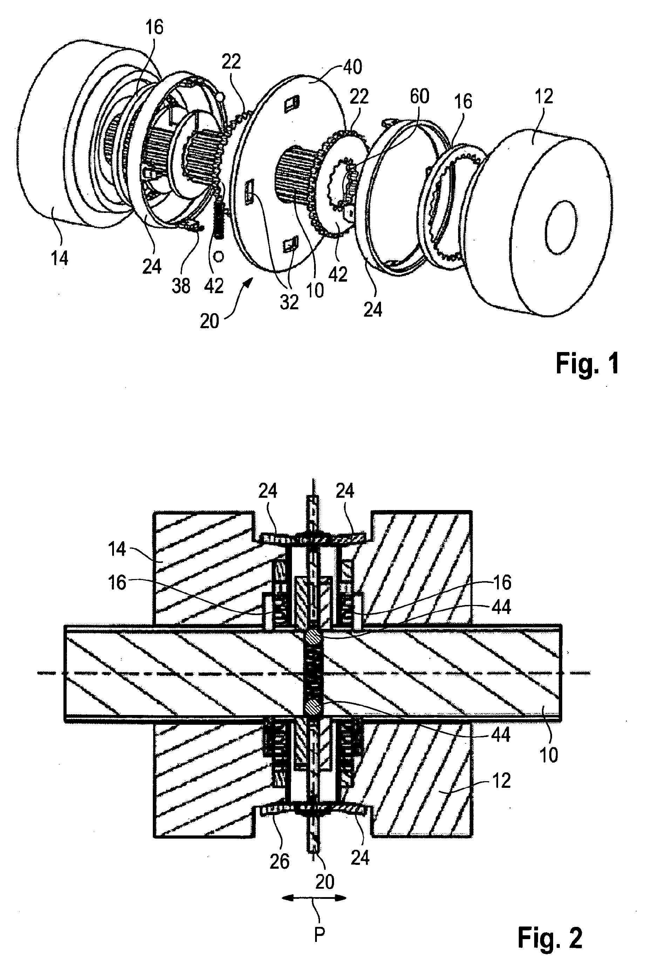

In Figur 1 ist eine Getriebewelle 10 gezeigt, auf der zwei Gangräder 12, 14 angeordnet sind. Diese sind nach Art eines Losrades drehbar auf der Getriebewelle 10 angeordnet. Jedem Gangrad 12, 14 ist eine Koppelverzahnung 16 zugeordnet, die drehfest mit dem entsprechenden Gangrad 12, 14 verbunden ist. Zwischen den beiden Gangrädern 12, 14 (siehe auch Figur 2) ist eine Synchronisierung beziehungsweise Synchronisierungsbaugruppe angeordnet, die als wesentliche Bauteile einen Übertragungsring 20 sowie zwei Reibringe 24 aufweist.

Der Übertragungsring 20 enthält ein Basisteil 40, das als Blechscheibe ausgebildet ist. Diese kann ausgestanzt sein. Auf jeder Seite des Basisteils 40 ist ein Verzahnungsteil 42 angeordnet, das ebenfalls als Scheibe ausgebildet ist. Das Verzahnungsteil weist an seinem Außenumfang eine Übertragungsverzahnung 22 und an seinem Innenumfang eine Innenverzahnung 60 auf. Die Innenverzahnung 60 ist an eine Verzahnung der Getriebewelle so angepasst, dass sie dort in Längsrichtung verschiebbar, jedoch in Umfangsrichtung drehfest eingreift. Bei der Innenverzahnung 60 kann es sich um ein Keilnuten- oder Keilwellenprofil handeln. Die beiden Verzahnungsteile 42 sind mit dem Basisteil 40 fest verbunden, beispielsweise durch Verkleben, Verschweißen, Verlöten, Vernieten, Clinchen oder Verprägen. Die Koppelverzahnung 16 ist mit einer Anspitzung und einer Hinterlegungsgeometrie ausgeführt. Die Anspitzung kann asymmetrisch und aus der Zahnmitte gesetzt ausgeführt werden. Die entsprechenden Zahnwinkel und Zahnneigungen sind entsprechend der Funktion anzupassen.

Die beiden Reibringe 24 sind auf der einen und der anderen Seite des Übertragungsrings 20 angeordnet und dienen dazu, die Drehzahl der Getriebewelle 10 mit der Drehzahl des zu schaltenden Gangrades 12, 14 zu synchronisieren. Um das entsprechende Gangrad drehfest mit der Getriebewelle 10 zu verbinden, wird der Übertragungsring 20 in axialer Richtung, also in der Richtung des Pfeils P von Figur 2, in der einen oder anderen Richtung verschoben. Hierfür ist eine (nicht dargestellte) Schaltgabel vorgesehen, die den Außenumfang des Übertragungsrings 20 umgreift. Durch Verschieben des Übertragungsrings 20 wird die Übertragungsverzahnung 22 eines der Verzahnungsteile 42 in Eingriff mit der Koppelverzahnung 16 des entsprechenden Gangrades gebracht. Auf diese Weise ist eine Drehmomentübertagung von der Getriebewelle über die Innenverzahnung 60, das Verzahnungsteil 42 und die Übertragungsverzahnung 22 zur Koppelverzahnung 16 und damit zum Gangrad herbeigeführt.

Der besondere Vorteil des Übertragungsrings 20 besteht darin, dass alle Bauteile einfach herzustellende Blechstanzteile sind, wobei an die Verbindung zwischen den Verzahnungsteilen 42 und dem Basisteil 40 keine übermäßig hohen Anforderungen zu stellen sind; die Drehmomentübertragung findet bei geschaltetem Gang direkt von der Getriebewelle 10 über das Verzahnungsteil 42 zum Gangrad statt, ohne dass das Basisteil 40 an der Drehmomentübertragung beteiligt ist. Das Basisteil 40 dient lediglich dazu, die Verzahnungsteile 42 in axialer Richtung auf der Getriebewelle zu verschieben. Lediglich während der Synchronphase wird auch über das Basisteil 40 und der Verbindung zu den Verzahnungsteilen 42 ein Drehmoment übertragen.

Wie in Figur 2 zu sehen ist, ist innerhalb der Getriebewelle 10 eine Rastvorrichtung mit Rastkugeln 44 angeordnet, mit der die Mittelstellung des Übertragungsrings 20 präzise definiert werden kann. Die Rastwirkung wird dadurch herbeigeführt, dass die Mittelöffnung des Basisteils 40 im Durchmesser grösser ausgestanzt wird als die Innenverzahnung 60, so dass sich zwischen den beiden Innenverzahnungen 60 auf den beiden Seiten des Basisteils 40 ein Freiraum ergibt, in den die Rastkugeln 44 in der Mittelstellung eintauchen können.

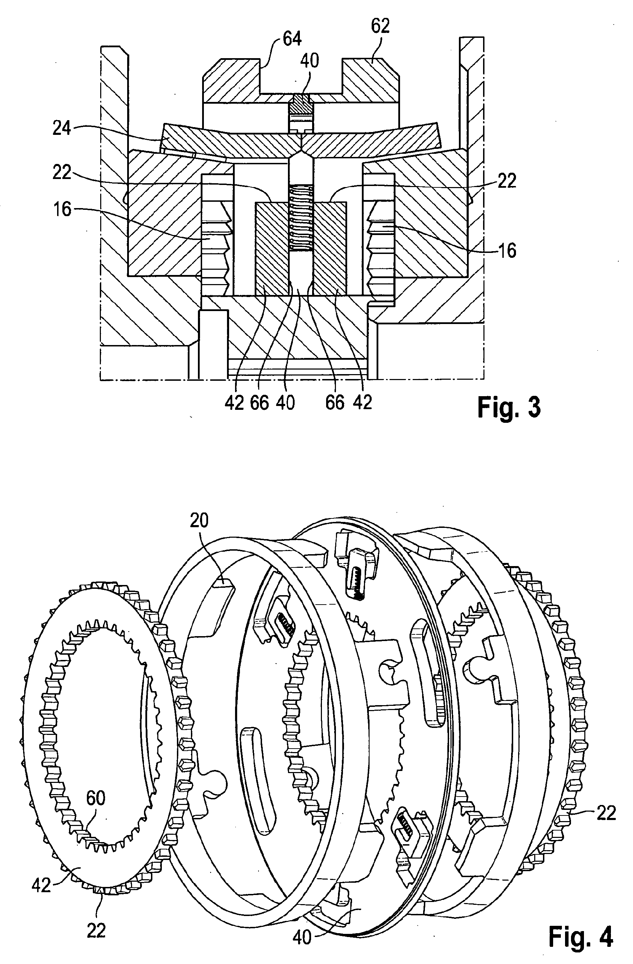

In den Figuren 3 und 4 ist eine zweite Ausführungsform eines Übertragungsrings 20 gezeigt. Diese unterscheidet sich von der ersten Ausführungsform dadurch, dass hier auch am Innenrand des Basisteils 40 eine Verzahnung vorgesehen ist, die auf der Verzahnung der Getriebewelle 10 sitzt. Zusätzlich ist am Außenumfang des Basisteils 40 eine Schaltmuffe 62 aufgesetzt, die auf ihrem Außenumfang mit einer Nut 64 versehen ist. In diese Nut 64 kann eine Schaltgabel eingreifen, mit der der Übertragungsring 20 in axialer Richtung verschoben werden kann. Die Verbindung zwischen dem Basisteil 40 und den Verzahnungsteilen 42 ist hier durch mehrere Schweißpunkte 66 symbolisiert.

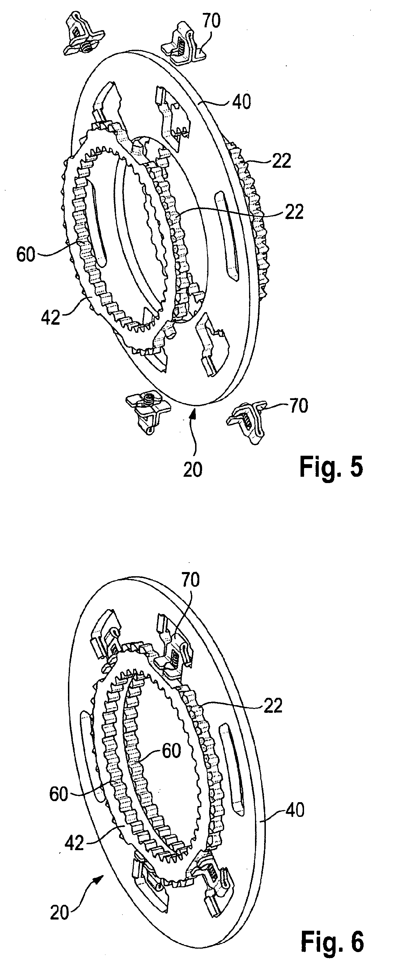

In den Figuren 5 und 6 ist eine dritte Ausführungsform gezeigt, die sich von der ersten und der zweiten Ausführungsform dadurch unterscheidet, dass das Verzahnungsteil 42 am Basisteil 40 lediglich durch klammerartige Druckstücke 70 gehalten ist, die an Nasen 72 der Verzahnungsteile 42 angreifen und diese gegen die einander gegenüberliegenden Außenflächen des Basisteils 40 drücken. Es ist somit lediglich eine gewisse Fixierung in Umfangsrichtung sowie in axialer Richtung gegeben. Die Verzahnungsteile sind also nicht in axialer Richtung fest am Basisteil angebracht, sondern so weit in axialer Richtung fixiert, dass die Verzahnungsteile 42 bei den Schaltbewegungen des Übertragungsrings den axialen Bewegungen des Basisteils folgen. Die Drehmomentübertragung von der Getriebewelle zum Gangrad erfolgt auch hier ausschließlich über die Verzahnungsteile 42.

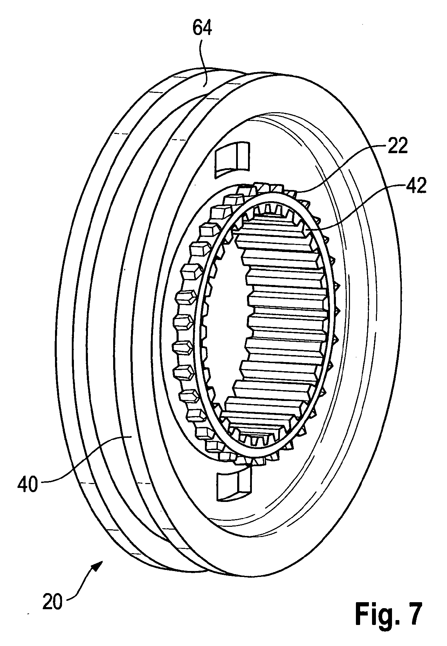

In Figur 7 ist ein Übertragungsring gemäß einer vierten Ausführungsform gezeigt, bei dem das Basisteil 40 als Sinterteil hergestellt ist. An diesem ist das Verzahnungsteil 42 angebracht, das als gestanzter Ring mit der Übertragungsverzahnung 22 ausgeführt ist. Das Verzahnungsteil 42 ist am Basisteil 40 beispielsweise verschweißt, verklebt oder verlötet. Die Drehmomentübertragung zur Getriebewelle 10 erfolgt hier durch eine Innenverzahnung, die am gesinterten Basisteil 40 vorgesehen ist. Zur Verstellung des Übertragungsrings 20 in axialer Richtung ist am Außenumfang eine Nut 64 vorgesehen, wie sie von der zweiten Ausführungsform bekannt ist.

## Patentansprüche

1. Übertragungsring (20) für eine Synchronisierungsbaugruppe für ein Schaltgetriebe, mit
einem Basisteil (40), an dem ein Betätigungsteil angreifen kann, um das Basisteil in axialer Richtung zu verschieben, und
zwei Verzahnungsteilen (42), die als separate Bauteile ausgeführt sowie mindestens in axialer Richtung am Basisteil (40) fixiert sind und jeweils eine Übertragungsverzahnung (22) aufweisen,
wobei auf beiden axialen Seiten des Basisteils (40) jeweils ein Verzahnungsteil (42) angeordnet ist, **dadurch gekennzeichnet, dass** die Verzahnungsteile (42) flach und scheibenförmig sind.

2. Übertragungsring nach Anspruch 1, **dadurch gekennzeichnet, dass** das Basisteil (40) aus Blech besteht.

3. Übertragungsring nach Anspruch 1 oder Anspruch 2, **dadurch gekennzeichnet, dass** das Basisteil (40) ein Stanzteil ist.

4. Übertragungsring nach Anspruch 1, **dadurch gekennzeichnet, dass** das Basisteil (40) pulvermetallurgisch hergestellt ist.

5. Übertragungsring nach einem der vorhergehenden Ansprüche, **dadurch gekennzeichnet, dass** die Verzahnungsteile (42) aus Blech bestehen.

6. Übertragungsring nach einem der vorhergehenden Ansprüche, **dadurch gekennzeichnet, dass** die Verzahnungsteile Stanzteile sind.

7. Übertragungsring nach einem der vorhergehenden Ansprüche, **dadurch gekennzeichnet, dass** die Verzahnungsteile (42) mit dem Basisteil (40) verschweißt, verlötet oder verklebt sind.

8. Übertragungsring nach einem der Ansprüche 1 bis 6, **dadurch gekennzeichnet, dass** die Verzahnungsteile (42) mit dem Basisteil (40) vernietet, verclincht oder verprägt sind.

9. Übertragungsring nach einem der vorhergehenden Ansprüche, **dadurch gekennzeichnet, dass** die Verzahnungsteile (42) mit einer Innenverzahnung (60) versehen sind.

10. Übertragungsring nach einem der vorhergehenden Ansprüche, **dadurch gekennzeichnet, dass** das Basisteil (40) mit einer Innenverzahnung versehen ist.

## Claims

1. A transmission ring (20) for a synchronizer assembly for a manual gearbox, comprising
a base part (40) which can be engaged by an actuating part to shift the base part in the axial direction, and
two toothing parts (42) which are configured as separate components and are fixed to the base part (40) at least in the axial direction and each include a transmission toothing (22),
one toothing part (42) each being arranged on the two axial sides of the base part (40), **characterized in that** the toothing parts (42) are flat and disk-shaped.

2. The transmission ring according to claim 1, **characterized in that** the base part (40) is made of sheet metal.

3. The transmission ring according to claim 1 or claim 2, **characterized in that** the base part (40) is a punched part.

4. The transmission ring according to claim 1, **characterized in that** the base part (40) is produced by powder metallurgy.

5. The transmission ring according to any of the preceding claims, **characterized in that** the toothing parts (42) are made of sheet metal.

6. The transmission ring according to any of the preceding claims, **characterized in that** the toothing parts are punched parts.

7. The transmission ring according to any of the preceding claims, **characterized in that** the toothing parts (42) are connected to the base part (40) by welding, soldering or adhesive bonding.

8. The transmission ring according to any of claims 1 to 6, **characterized in that** the toothing parts (42) are connected to the base part (40) by riveting, clinching or stamping.

9. The transmission ring according to any of the preceding claims, **characterized in that** the toothing parts (42) are provided with an internal toothing (60).

10. The transmission ring according to any of the preceding claims, **characterized in that** the base part (40) is provided with an internal toothing.

## Revendications

1. Anneau de transmission (20) pour un ensemble de synchronisation pour une boîte de vitesses, comportant
une pièce de base (40) sur laquelle une pièce de commande peut s'engager pour déplacer la pièce de base dans le sens axial, et
deux pièces de denture (42) qui sont réalisées sous forme de composants séparés, qui sont fixées sur la pièce de base (40) au moins dans le sens axial et qui présentent chacune une denture de transmission (22),
une pièce de denture (42) respective étant agencée des deux côtés axiaux de la pièce de base (40), **caractérisé en ce que** les pièces de denture (42) sont planes et en forme de disque.

2. Anneau de transmission selon la revendication 1, **caractérisé en ce que** la pièce de base (40) est réalisée en tôle.

3. Anneau de transmission selon la revendication 1 ou la revendication 2, **caractérisé en ce que** la pièce de base (40) est une pièce découpée.

4. Anneau de transmission selon la revendication 1, **caractérisé en ce que** la pièce de base (40) est fabriquée par métallurgie des poudres.

5. Anneau de transmission selon l'une des revendications précédentes, **caractérisé en ce que** les pièces de denture (42) sont réalisées en tôle.

6. Anneau de transmission selon l'une des revendications précédentes, **caractérisé en ce que** les pièces de denture sont des pièces découpées.

7. Anneau de transmission selon l'une des revendications précédentes, **caractérisé en ce que** les pièces de denture (42) sont reliées à la pièce de base (40) par soudage, par brasage ou par collage.

8. Anneau de transmission selon l'une des revendications 1 à 6, **caractérisé en ce que** les pièces de denture (42) sont reliées à la pièce de base (40) par rivetage, par clinchage ou par estampage.

9. Anneau de transmission selon l'une des revendications précédentes, **caractérisé en ce que** les pièces de denture (42) sont pourvues d'une denture intérieure (60).

10. Anneau de transmission selon l'une des revendications précédentes, **caractérisé en ce que** la pièce de base (40) est pourvue d'une denture intérieure.
